# EUROPÄISCHE PATENTSCHRIFT

(11) **EP 3 254 882 B1**
(45) Veröffentlichungstag und Bekanntmachung des Hinweises auf die Patenterteilung: **25.08.2021**
(21) Anmeldenummer: 17167513.5
(22) Anmeldetag: 21.04.2017
(51) Int. Cl.: B60K 37/06

(54) **MULTIFUNKTIONALE ANZEIGE- UND BEDIENEINRICHTUNG FÜR EIN KRAFTFAHRZEUG**
MULTIFUNCTIONAL DISPLAY AND OPERATING DEVICE FOR A MOTOR VEHICLE
DISPOSITIF DE COMMANDE ET D'AFFICHAGE MULTIFONCTIONS POUR UN VÉHICULE AUTOMOBILE

(30) Priorität: 22.04.2016 DE 102016206885
(43) Veröffentlichungstag der Anmeldung: 13.12.2017
(73) Patentinhaber: VOLKSWAGEN AKTIENGESELLSCHAFT, 38440 Wolfsburg (DE)
(72) Erfinder: HAHN, Alexander, 38104 Braunschweig (DE)

(56) Entgegenhaltungen:
- EP-A2- 2 298 587
- EP-A2- 2 960 096
- DE-A1-102006 037 156

## Beschreibung

Die Erfindung betrifft eine multifunktionale Anzeige- und Bedieneinrichtung für ein Kraftfahrzeug.

Multifunktionale Anzeige- und Bedieneinrichtungen erlauben die Wiedergabe von einer Vielzahl von Informationen und die Bedienung von einer Vielzahl von Fahrzeugfunktionen in einem Kraftfahrzeug. Im Zusammenspiel mit geeigneten Displays, die teilweise auch als Touchscreen ausgestaltet sein können, erlaubt dieses umfängliche Anzeige- und Bedienkonzepte. Da diese sich in einem Kraftfahrzeug überwiegend an den Fahrer des Kraftfahrzeuges richten und eine Benutzung während des Fahrbetriebes erfordern, ist es von großer Bedeutung die Aufnahme der Informationen und die Bedienung so einfach und komfortabel wie möglich zu gestalten, so dass der Fahrer möglichst wenig abgelenkt wird.

Die DE 10 2006 037 156 A1 offenbart ein Verfahren zum Betreiben einer interaktiven Bedienvorrichtung, die Bestandteil einer Kraftfahrzeugkonsole sein kann. Es werden Bedienelemente auf einer Anzeigevorrichtung angezeigt wobei bei Annäherung eines Fingers eines Nutzers mindestens ein Bedienelement vergrößert dargestellt wird.

Die EP 2 298 587 A2 offenbart eine Anzeigevorrichtung für ein Fahrzeug, bei dem ein Tachometer mit einer Geschwindigkeitsskala vorgesehen ist wobei mit einem bogenförmigen Zeiger einem Fahrer die Geschwindigkeit und die Änderung der Geschwindigkeit angezeigt werden kann.

Der Erfindung liegt die Aufgabe zugrunde, eine solche möglichst einfache und komfortable multifunktionale Anzeige- und Bedieneinrichtung zu schaffen.

Die gestellte Aufgabe wird durch die Merkmale des Patentanspruchs 1 gelöst. Vorteilhafte Aus- und Weiterbildungen sind in den Unteransprüchen dargestellt.

Gemäß einer ersten Ausführungsform der Erfindung wird in dem Display mindestens ein Anzeigeinstrument dargestellt, bei dem ein Parameter zum Betrieb des Kraftfahrzeugs in Form eines Balkens anzeigbar ist und die Länge des dargestellten Balkens von dem Parameter abhängt, wobei auch die Dicke des dargestellten Balkens von dem Parameter abhängt.

Eine vorteilhafte Weiterbildung dieser ersten Ausführungsform der Erfindung sieht vor, dass die Länge und Breite des dargestellten Balkens proportional zu dem Parameter zum Betrieb des Kraftfahrzeugs zu- und abnimmt.

Insbesondere kann das Anzeigeinstrument als kreisförmiges Rundinstrument und der Balken als kreisförmiger Balken ausgestaltet sein.

Gemäß einer weiteren Weiterbildung dieser ersten Ausführungsform der Erfindung wird ein Teil des kreisförmigen Balkens so hervorgehoben, dass er von dem Rest des kreisförmigen Balkens unterschieden werden kann.

Von Vorteil ist es, wenn zusätzlich ein Parameter zum Betrieb des Kraftfahrzeugs in der Mitte des Anzeigeinstruments angezeigt wird.

Hierbei kann der zusätzlich angezeigte Parameter insbesondere von dem gewählten Fahrmodus abhängen.

Nachfolgend wird die Erfindung anhand mehrerer Ausführungsbeispiele näher beschrieben. Die zugehörigen Zeichnungen zeigen:
Fig. 1: verschiedene Darstellungen einer erfindungsgemäßen Anzeigeeinrichtung gemäß einer ersten Ausführungsform für ein Elektrofahrzeug,
Fig. 2: weitere Darstellungen einer erfindungsgemäßen Anzeigeeinrichtung gemäß der ersten Ausführungsform,

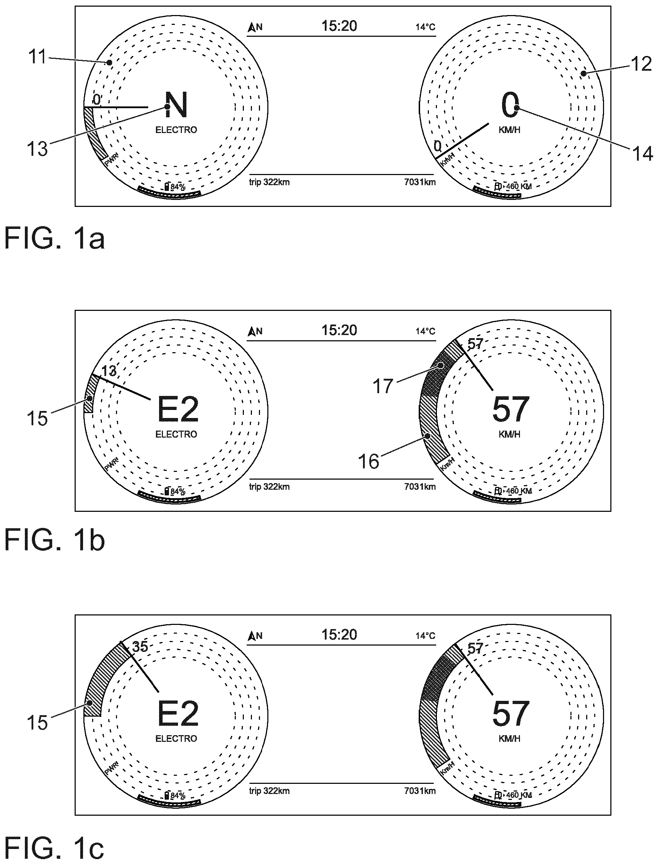

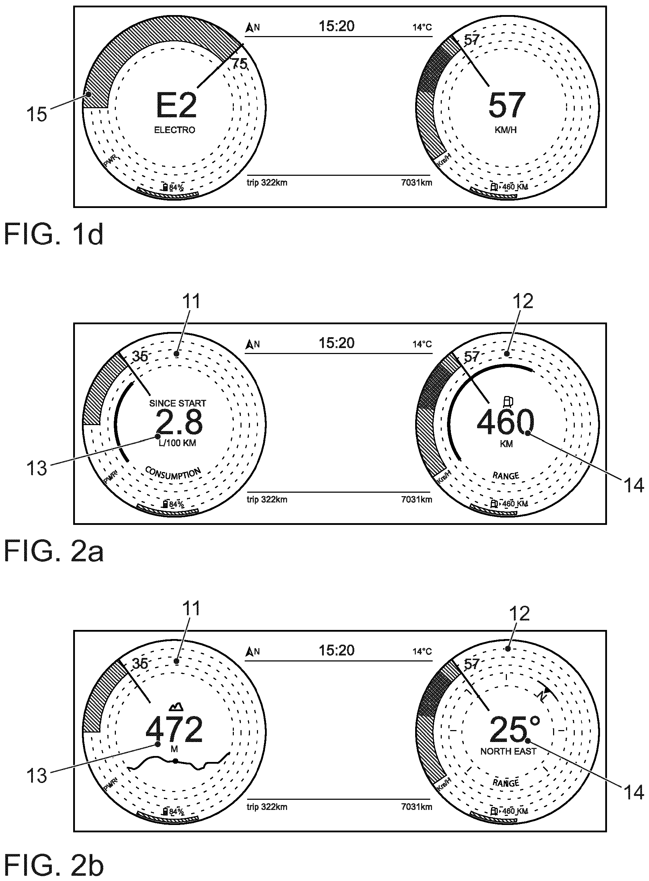

Die Figuren 1 und 2 zeigen eine erfindungsgemäße Multifunktions-Anzeigeeinrichtung gemäß einer ersten Ausführungsform, die in der Armaturentafel eines Kraftfahrzeuges angeordnet sein kann. Die Multifunktions-Anzeigeeinrichtung ist hierbei als digitales Kombiinstrument mit einem hochauflösenden Display ausgestaltet, hat aber in Anlehnung an klassische Kombiinstrumente im wesentlichen zwei kreisförmige Rundinstrumente um gleichzeitig mehrere für den Fahrer besonders relevante Informationen hervorgehoben darstellen zu können.

In den Teilfiguren 1a bis 1d sind typische Anzeigen für ein Elektrofahrzeug dargestellt. Das linke kreisförmige Rundinstrument 11 dient als Leistungsanzeige mittels einer prozentualen Skala in Form eines kreisförmigen Balkens und zeigt zusätzlich in der Mitte den eingelegten Gang als Buchstabenkürzel 13 an. Im rechten kreisförmigen Rundinstrument 12 wird die aktuelle Geschwindigkeit des Fahrzeugs auf zweierlei Weise angezeigt, in Form eines kreisförmigen Balkens mit einer der Geschwindigkeit proportionalen Länge und zusätzlich in der Mitte als Zahlenwert 14.

In der Figur 1a befindet sich das Fahrzeug im Ruhezustand, es ist kein Gang eingelegt, symbolisiert durch das Buchstabenkürzel "N" im linken Rundinstrument 11. Die Leistungsanzeige ist auf 0%, der kreisförmige Balken hat entsprechend gewissermaßen die Länge Null und wird nicht dargestellt. Da sich das Fahrzeug nicht bewegt, wird im rechten Rundinstrument 12 in der Mitte als Zahlenwert "0" eingeblendet, der kreisförmige Balken wird auch hier nicht dargestellt.

Wird das Fahrzeug nun vom Fahrer in Bewegung gesetzt und befindet sich im zweiten Gang, so ändert sich die Anzeige wie in Figur 1b dargestellt. Im linken Rundinstrument wird der eingelegte Gang durch das Buchstabenkürzel "E2" symbolisiert, gleichzeitig wird die aktuell vom Fahrer abgerufene Energie als Zahlenwert "13", aber nun auch als kreisförmiger Balken 15 dargestellt. Im rechten Rundinstrument wird nun die aktuelle Geschwindigkeit von 57 km/h sowohl als Zahlenwert in der Mitte, als auch als kreisförmiger Balken 16 wiedergegeben. Ein Teil 17 dieses kreisförmigen Balkens 16 kann in einer anderen Farbe dargestellt werden um so beispielsweise einen gesetzlich vorgeschriebenen Geschwindigkeitsbereich hervorzuheben.

Nimmt nun die vom Fahrer abgerufene Energie zu, beispielsweise aufgrund einer zunehmenden Steigung der Fahrbahn, so verändert sich die Anzeige wie in den Figuren 1c und 1d dargestellt. Gegenüber einem Wert von 13% in Figur 1b nimmt die abgerufene Energie zunächst auf 35% in Figur 1c und dann auf 75% in Figur 1d zu. Entsprechend verändert sich der kreisförmige Balken 15. So wird der dargestellte Balken 15 proportional verlängert. Zusätzlich wird erfindungsgemäß auch die Dicke des dargestellten Balkens proportional vergrößert. Dieses erhöht weiter die leichte Erfassbarkeit des angezeigten Parameters für den Fahrzeugführer und reduziert eine mögliche Fahrerablenkung da die erforderliche Blickdauer auf das Kombiinstrument weiter reduziert wird.

Figur 2 zeigt in den Teilfiguren 2a und 2b weitere typische Anzeigen gemäß der ersten Ausführungsform. In Figur 2a werden für ein Fahrzeug, das auch einen Verbrennungsmotor aufweist, beispielsweise für ein Hybridfahrzeug, relevante Parameter angezeigt. Im linken Rundinstrument 11 wird nun in der Mitte der Anzeige 13 der Durchschnittsverbrauch seit dem Start angezeigt, im rechten kreisförmigen Rundinstrument 12 in der Mitte der Anzeige 14 die verbleibende Reichweite des Fahrzeugs. In Figur 2b wird in einem weiteren Beispiel die Anzeige bei einem in einem Offroad-Mode betriebenen Fahrzeug gezeigt. Im linken Rundinstrument 11 wird nun in der Mitte der Anzeige 13 das Höhenprofil mit der aktuellen Höhe (m ü. NN) angezeigt, im rechten kreisförmigen Rundinstrument 12 in der Mitte der Anzeige 14 ein Kompass mit aktueller Ausrichtung des Fahrzeugs.

## Patentansprüche

1. Multifunktionale Anzeige- und Bedieneinrichtung für ein Kraftfahrzeug mit einem Display zur Anzeige von Informationen, wobei in dem Display mindestens ein Anzeigeinstrument (11, 12) dargestellt wird, bei dem ein Parameter zum Betrieb des Kraftfahrzeugs in Form eines Balkens (15, 16) anzeigbar ist und die Länge des dargestellten Balkens von dem Parameter abhängt, **dadurch gekennzeichnet, daß** auch die Dicke des dargestellten Balkens (15, 16) von dem Parameter abhängt.

2. Multifunktionale Anzeige- und Bedieneinrichtung nach Anspruch 1, **dadurch gekennzeichnet, dass** die Länge und Breite des dargestellten Balkens (15, 16) proportional zu dem Parameter zum Betrieb des Kraftfahrzeugs zu- und abnimmt.

3. Multifunktionale Anzeige- und Bedieneinrichtung nach Anspruch 1 oder 2, **dadurch gekennzeichnet, dass** das Anzeigeinstrument (11, 12) als kreisförmiges Rundinstrument und der Balken (15, 16) als kreisförmiger Balken ausgestaltet ist.

4. Multifunktionale Anzeige- und Bedieneinrichtung nach einem der vorhergehenden Ansprüche, **dadurch gekennzeichnet, dass** ein Teil (17) des kreisförmigen Balkens (15, 16) so hervorgehoben wird, das er von dem Rest des kreisförmigen Balkens (15, 16) unterschieden werden kann.

5. Multifunktionale Anzeige- und Bedieneinrichtung nach einem der vorhergehenden Ansprüche, **dadurch gekennzeichnet, dass** zusätzlich ein Parameter (13, 14) zum Betrieb des Kraftfahrzeugs in der Mitte des Anzeigeinstruments (11, 12) angezeigt wird.

6. Multifunktionale Anzeige- und Bedieneinrichtung nach Anspruch 5, **dadurch gekennzeichnet, dass** der zusätzlich angezeigte Parameter (13, 14) von dem gewählten Fahrmodus abhängt.

## Claims

1. Multifunctional indicating and operating device for a motor vehicle with a display for indicating information, wherein at least one indicating instrument (11, 12) in which a parameter relating to the operation of the motor vehicle can be indicated in the form of a bar (15, 16) is displayed in the display and the length of the displayed bar depends on the parameter, **characterized in that** the thickness of the displayed bar (15, 16) also depends on the parameter.

2. Multifunctional indicating and operating device according to Claim 1, **characterized in that** the length and width of the displayed bar (15, 16) increases and decreases in proportion to the parameter relating to the operation of the motor vehicle.

3. Multifunctional indicating and operating device according to Claim 1 or 2, **characterized in that** the indicating instrument (11, 12) is designed as a circular dial-type instrument and the bar (15, 16) is designed as a circular bar.

4. Multifunctional indicating and operating device according to one of the preceding claims, **characterized in that** a part (17) of the circular bar (15, 16) is made to stand out in such a way that it can be distinguished from the rest of the circular bar (15, 16).

5. Multifunctional indicating and operating device according to one of the preceding claims, **characterized in that** a parameter (13, 14) relating to the operation of the motor vehicle is additionally indicated in the middle of the indicating instrument (11, 12).

6. Multifunctional indicating and operating device according to Claim 5, **characterized in that** the additionally indicated parameter (13, 14) depends on the chosen driving mode.

## Revendications

1. Dispositif d'affichage et de commande multifonctionnel d'un véhicule automobile, ledit dispositif comprenant un afficheur destiné à afficher des informations, au moins un instrument d'affichage (11, 12) étant représenté dans l'afficheur, instrument d'affichage dans lequel un paramètre de commande du véhicule automobile peut être affiché sous la forme d'une barre (15, 16) et la longueur de la barre représentée dépend du paramètre, **caractérisé en ce que** l'épaisseur de la barre (15, 16) représentée dépend également du paramètre.

2. Dispositif d'affichage et de commande multifonctionnel selon la revendication 1, **caractérisé en ce que** la longueur et la largeur de la barre (15, 16) représentée augmentent et diminuent proportionnellement au paramètre de commande du véhicule automobile.

3. Dispositif d'affichage et de commande multifonctionnel selon la revendication 1 ou 2, **caractérisé en ce que** l'instrument d'affichage (11, 12) est conçu comme un instrument rond circulaire et la barre (15, 16) est conçue comme une barre circulaire.

4. Dispositif d'affichage et de commande multifonctionnel selon l'une des revendications précédentes, **caractérisé en ce qu'**une partie (17) de la barre circulaire (15, 16) est mise en évidence de manière à pouvoir être distinguée du reste de la barre circulaire (15, 16).

5. Dispositif d'affichage et de commande multifonctionnel selon l'une des revendications précédentes, **caractérisé en ce qu'**un paramètre (13, 14) de commande du véhicule automobile est affiché en plus au centre de l'instrument d'affichage (11, 12).

6. Dispositif d'affichage et de commande multifonctionnel selon la revendication 5, **caractérisé en ce que** le paramètre (13, 14) affiché en plus dépend du mode de conduite sélectionné.
